(19) Europäisches Patentamt
European Patent Office
Office européen des brevets

(11) EP 4 005 822 B1

(12) **EUROPEAN PATENT SPECIFICATION**

(45) Date of publication and mention of the grant of the patent:
**01.05.2024 Bulletin 2024/18**

(21) Application number: **21795620.0**

(22) Date of filing: **11.03.2021**

(51) International Patent Classification (IPC):
***B60C 1/00*** *(2006.01)* ***B60C 11/00*** *(2006.01)*
***C08K 3/013*** *(2018.01)* ***C08L 21/00*** *(2006.01)*
***C08L 101/00*** *(2006.01)*

(52) Cooperative Patent Classification (CPC):
(C-Sets available)
**B60C 3/04; B60C 1/0016; B60C 11/005;**
**C08L 7/00;** B60C 2011/0025 (Cont.)

(86) International application number:
**PCT/JP2021/009853**

(87) International publication number:
**WO 2021/220634 (04.11.2021 Gazette 2021/44)**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.04.2020 JP 2020078382**

(43) Date of publication of application:
**01.06.2022 Bulletin 2022/22**

(73) Proprietor: **Sumitomo Rubber Industries, Ltd.**
**Kobe-shi, Hyogo 651-0072 (JP)**

(72) Inventor: **HAMAMURA, Kenji**
**Kobe-shi, Hyogo 651-0072 (JP)**

(74) Representative: **TBK**
**Bavariaring 4-6**
**80336 München (DE)**

(56) References cited:
**WO-A1-2005/105913**
**WO-A1-2013/191222**
**JP-A- 2002 503 177**
**JP-A- 2003 292 672**
**JP-A- 2005 023 505**
**JP-A- 2007 119 582**
**JP-A- 2007 119 582**
**JP-A- 2010 031 117**
**JP-A- 2010 174 232**
**JP-A- 2013 510 939**
**JP-A- 2014 189 697**
**JP-A- 2018 095 762**
**JP-A- 2019 089 984**
**JP-A- 2019 131 795**
**JP-A- 2019 519 432**
**US-A1- 2007 144 643**
**US-A1- 2018 171 118**
**US-A1- 2018 171 120**
**US-A1- 2018 282 444**
**US-A1- 2019 225 778**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08K 3/04, C08K 3/36, C08L 15/00;**
**C08L 7/00, C08K 3/36, C08L 15/00**

## Description

### TECHNICAL FIELD

The present invention relates to a tire with improved ride comfort.

### BACKGROUND ART

Pneumatic tires have been required to be lightweight in light of improvement in fuel efficiency. JP 2017-43281 A describes a given tire having a reduced rubber volume for weight reduction.

Further, US 2018/171118 A1 discloses a rubber composition, comprising a terminal-modified polystyrene butadiene rubber and a thermoplastic elastomer. US 2018/171120 A1 discloses a rubber composition comprising polystyrene butadiene rubber and a thermoplastic elastomer. In each of US 2018/171118 A1 and US 2018/171120 A1 the thermoplastic elastomer shows a tan δ peak value in the range of -20 to 20°C in a dynamic viscoelasticity test (temperature dependency measurement at 10 Hz) of the elastomer according to JIS K6394, and the peak value being 1 or more. JP 2007-119582 A discloses a further pneumatic tire.

### SUMMARY OF THE INVENTION

### PROBLEM TO BE SOLVED BY THE INVENTION

However, a lightweight tire with a reduced rubber volume has a problem that it has a poor ride comfort; and particularly, the more the tire wears, the greater the tendency for the poor ride comfort becomes.

It is an objective of the present invention to provide a tire that can improve in ride comfort while being lightweight, particularly a tire that can suppress deterioration of ride comfort due to abrasion.

### MEANS TO SOLVE THE PROBLEM

As a result of intensive studies, the present inventor has found that, in a lightweight tire configured such that the tire weight relative to the maximum load capacity of the tire is within a predetermined range, by making its tread part to have at least one rubber layer of a rubber composition that comprises a rubber component and a predetermined thermoplastic elastomer, the above-described problem can be solved, and conducted further studies to complete the present invention.

That is, the present invention relates to:

[1] A tire comprising a tread part,

the tread part comprising at least one rubber layer of a rubber composition comprising a rubber component and a thermoplastic elastomer,
wherein a ratio ($W_T/W_L$) of a tire weight $W_T$ (kg) to a maximum load capacity $W_L$ (kg) of the tire is 0.0176 or less, further preferably 0.175 or less, further preferably 0.0174 or less, and
wherein, in a dynamic viscoelasticity test (temperature-dependent measurement at 10Hz) in accordance with JIS K 6394, the thermoplastic elastomer exhibits a tan δ peak value in a range of -20°C to 20°C, preferably in a range of -15°C to 20°C, more preferably in a range of -13°C to 20°C, further preferably in a range of -10°C to 20°C, and the peak value is 1.00 or more, preferably 1.10 or more, more preferably 1.15 or more, further preferably 1.20 or more;

[2] The tire of [1] above,

wherein a tan δ at 15°C of the rubber composition is 0.10 or more, preferably 0.11 or more, more preferably 0.12 or more, and
wherein a complex elastic modulus (E*) at 30°C is 8.0 MPa or less, preferably 7.9 or less, more preferably 7.8 or less, further preferably 7.7 or less, further preferably 7.6 or less, further preferably 7.5 or less;

[3] The tire of [1] or [2] above,
wherein a specific gravity of the rubber composition is 1.200 or less, preferably 1.198 or less, more preferably 1.195 or less, further preferably 1.193 or less;
[4] The tire of any one of [1] to [3] above,

wherein the rubber composition further comprises a reinforcing filler, and a content of the reinforcing filler based on 100 parts by mass of the rubber component is 75 parts by mass or less, preferably 74 parts by mass or less, more preferably 73 parts by mass or less, further preferably 72 parts by mass or less, further preferably 71 parts by mass or less, further preferably 70 parts by mass or less;
[5] The tire of any one of [1] to [4] above,
wherein the thermoplastic elastomer comprises a hydrogenated thermoplastic elastomer; and
[6] The tire of any one of [1] to [5] above,
wherein the tread part comprises at least two layers of: an outer layer forming an outermost surface and an inner layer located inner inside with respect to the outer layer, and at least one of these layers is formed of the rubber composition.

EFFECTS OF THE INVENTION

A tire of the present invention, configured such that the tire weight relative to the maximum load capacity of the tire is within a predetermined range, and that the tread part has at least one rubber layer of a rubber composition that comprises a rubber component and a predetermined thermoplastic elastomer, can improve in ride comfort, particularly, suppress deterioration of ride comfort due to abrasion, while being lightweight.

BRIEF DESCRIPTION OF THE DRAWINGS

FIG. 1 is a view showing one example of a cross-sectional view of a tire.
Fig. 2 is a view showing a tire cross-sectional width W, a tire cross-sectional height Ht, and a tire outer diameter Dt in the cross-sectional view of the tire.

EMBODIMENT FOR CARRYING OUT THE INVENTION

A tire that is one embodiment of the present invention comprises a tread part,

the tread part comprising at least one rubber layer of a rubber composition comprising a rubber component and a thermoplastic elastomer,
wherein a ratio ($W_T/W_L$) of a tire weight $W_T$ (kg) to a maximum load capacity $W_L$ (kg) of the tire is 0.0176 or less, and
wherein, in a dynamic viscoelasticity test (temperature-dependent measurement at 10Hz) in accordance with JIS K 6394, the thermoplastic elastomer exhibits a tan δ peak value in a range of -20°C to 20°C, and the peak value is 1.00 or more.

In the present invention, the following is considered as a mechanism that allows for the tire, while being a lightweight tire, to improve in ride comfort, particularly, suppress deterioration of ride comfort due to abrasion although it is not intended to be bound by theory. That is, since the tire of the present invention in which a ratio ($W_T/W_L$) of a tire weight $W_T$ (kg) to a maximum load capacity $W_L$ (kg) of the tire is 0.0176 or less is relatively lightweight and thus it is hard for the tire to alleviate load inputs from a road surface, the tire easily vibrates and tends to have a high vibration frequency. Also, tire abrasion further increases such a tendency. Accordingly, a thermoplastic elastomer having a peak in a low temperature range is compounded, which makes it possible to convert vibrational energy into thermal energy, and thus load inputs from the road surface can be alleviated. Therefore, it is considered that the tire can also improve in and maintain ride comfort even though it is lightweight.

Besides, in the present specification, the maximum load capacity $W_L$ (kg) is a value calculated by the following equations (1) and (2), where W (mm) is a tire cross-sectional width, Ht (mm) is a tire cross-sectional height, and Dt (mm) is a tire outer diameter when the tire is filled with air at a pressure of 250 kPa, the value being smaller by 50 kg to 100 kg than a maximum load capacity based on a load index (LI) prescribed in JATMA standards.

$$V = \{(Dt/2)^2 - (Dt/2 - Ht)^2\} \times \pi \times W \quad \cdots (1)$$

$$W_L = 0.000011 \times V + 100 \quad \cdots (2)$$

In the rubber composition, the tan δ at 15°C (tan δ (15°C)) is preferably 0.10 or more, and the complex elastic

modulus (E*) at 30°C (E*(30°C)) is preferably 8.0 MPa or less. When tan δ (15°C) and E*(30°C) are set within the above-described ranges, vibration can be absorbed by the entire rubber composition for tread, and therefore it is considered that ride comfort can be maintained. The tan δ (15°C) is more preferably 0.11 or more, further preferably 0.12 or more. On the other hand, an upper limit of the tan δ (15°C) is not particularly limited to from the above-described viewpoints, but usually, preferably 0.25 or less, more preferably 0.20 or less. The E*(30°C) is more preferably 7.9 or less, further preferably 7.8 or less, further preferably 7.7 or less, further preferably 7.6 or less, further preferably 7.5 or less. On the other hand, a lower limit of the E*(30°C) is not particularly limited to from the above-described viewpoints, but usually, preferably 4.0 or more, more preferably 4.5 or more. The tan δ (15°C) can be raised, for example, by increasing a content of silica, and conversely, it can be lowered by decreasing the content of silica. The E*(30°C) can be raised, for example, by increasing a content of a vulcanizing agent and can be lowered by decreasing the content of the vulcanizing agent. The tan δ (15°C) and the E*(30°C) are values measured by methods described below in "EXAMPLE".

A specific gravity of the rubber composition is preferably 1.200 or less. It is considered that, by setting the above-described specific gravity within the above-described ranges to reduce a weight of a tread, deterioration of abrasion resistance can be prevented and deterioration of ride comfort due to abrasion can be suppressed. The above-described specific gravity is more preferably 1.198 or less, further preferably 1.195 or less, further preferably 1.193 or less. On the other hand, a lower limit of the above-described specific gravity is not particularly limited to from the above-described viewpoints, but usually, preferably 1.160 or more, further preferably 1.165 or more, further preferably 1.170 or more. The specific gravity can be raised, for example, by increasing the content of silica, and conversely, it can be lowered by decreasing the content of silica.

The rubber composition preferably further comprises a reinforcing filler, and a content of the reinforcing filler based on 100 parts by mass of the rubber component is preferably 75 parts by mass or less. When the content of the reinforcing filler is 75 parts by mass or less, a relative proportion of the rubber component and the thermoplastic elastomer in the rubber composition increases, and therefore it is considered that ride comfort can be maintained. The above-described content is more preferably 74 parts by mass or less, further preferably 73 parts by mass or less, further preferably 72 parts by mass or less, further preferably 71 parts by mass or less, further preferably 70 parts by mass or less. On the other hand, a lower limit of the above-described content is not particularly limited to from the above-described viewpoints, but usually, preferably 50 parts by mass or more, more preferably 55 parts by mass or more.

The thermoplastic elastomer preferably comprises a hydrogenated thermoplastic elastomer. It is considered that, since abrasion resistance becomes high by hydrogenation of the thermoplastic elastomer, deterioration of ride comfort due to abrasion can be further suppressed and ride comfort of the lightweight tire can be maintained for a long period of time.

In a case in which the tread part comprises at least two layers of: an outer layer forming an outermost surface and an inner layer located inner side with respect to the outer layer, at least one of these layers is formed of the rubber composition. In this case, there is no particular limitation as to which of these two layers is formed of the rubber composition. For example, in a case in which the outmost layer is formed as a first layer and a second layer is present on the inside of the tire, one of the two layers may be formed of the rubber composition, or all of the two layers may be formed of the rubber composition. Also, in a case in which a third layer further is present on the inside of the second layer, any one of these three layers may be formed of the rubber composition, any two of these three layers may be formed of the rubber composition, or all of these three layers may be formed of the rubber composition. The same applies to a case in which the number of layers is further increased.

A tire that is one embodiment of the present invention is described in detail.

In the present specification, the specific gravity of the rubber composition means a specific gravity of a vulcanized rubber composition and is measured based on JIS K 2249-4:2011.

Numerical values of upper limits and lower limits related to "or more", "or less" and "to" for the descriptions of numerical ranges can be arbitrarily combined each other, and numerical values in Examples can also be set to be such upper limits and lower limits. Also, unless otherwise noted, a numerical range identified with "to" means to include the numerical values of both ends.

<Rubber components>

In the present invention, as rubber components, any of those usually used in the tire industry can be appropriately used. Examples of such rubber components include, for example, diene-based rubbers such as an isoprene-based rubber, a styrene-butadiene rubber (SBR), a butadiene rubber (BR), a styrene-isoprene-butadiene copolymer rubber (SIBR), a styrene-isobutylene-styrene block copolymer (SIBS), a chloroprene rubber (CR), an acrylonitrile-butadiene rubber (NBR), and a polynorbornene rubber; non-diene-based rubbers such as a hydrogenated nitrile rubber (HNBR), a butyl rubber (IIR), an ethylene propylene rubber, a silicone rubber, a polyethylene chloride rubber, a fluororubber (FKM), an acrylic rubber (ACM), and a hydrin rubber; and the like. These rubber components may be used alone, or two or more thereof may be used in combination.

The rubber component preferably comprises a diene-based rubber, or may consist of a diene-based rubber. Also, the rubber component preferably comprises, as a diene-based rubber, at least one selected from the group consisting of an isoprene-based rubber, a SBR and a BR. The rubber component may be a rubber component comprising an isoprene-based rubber and a SBR, or may be a rubber component comprising an isoprene-based rubber, a SBR and a BR. Furthermore, the rubber component may be a rubber component consisting of an isoprene-based rubber and a SBR, or may be a rubber component consisting of an isoprene-based rubber, a SBR, and a BR.

<Isoprene-based rubber>

As an isoprene-based rubber, for example, those common in the tire industry can be used, such as an isoprene rubber (IR) and a natural rubber. Among them, examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber; and the like. Among them, a natural rubber is preferable, and for example, a NR can be appropriately used. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 10% by mass or more, more preferably 15% by mass or more, further preferably 20% by mass or more, further preferably 25% by mass or more, from the viewpoints of processability and durability. On the other hand, an upper limit of the content of the isoprene-based rubber in the rubber component is, but not particularly limited to, preferably 60% by mass or less, more preferably 50% by mass or less, further preferably 40% by mass or less, further preferably 35% by mass or less, from the viewpoint of obtaining a good ride comfort due to damping property at the tread part.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its end and/or main chain, a modified SBR coupled with tin, a silicon compound, etc. (a modified SBR of condensate or having a branched structure, etc.), and the like. Among them, a S-SBR and a modified SBR are preferable, from the viewpoint that fuel efficiency and abrasion resistance can be well improved. Furthermore, the hydrogenated ones of these SBRs (hydrogenated SBRs) and the like can also be used. These SBRs may be used alone, or two or more thereof may be used in combination.

A styrene content of the SBR is preferably 15% by mass or more, more preferably 20% by mass or more, from the viewpoints of securing damping property at the tread part and wet grip performance. Moreover, it is preferably 60% by mass or less, more preferably 50% by mass or less, from the viewpoints of temperature dependency of grip performance and abrasion resistance. Besides, in the present specification, the styrene content of the SBR is calculated by $^1$H-NMR measurement.

A vinyl bonding amount of the SBR is preferably 10 mol% or more, more preferably 13 mol% or more, further preferably 16 mol% or more, from the viewpoints of ensuring reactivity with silica, rubber strength, and abrasion resistance. Moreover, the vinyl bonding amount of the SBR is preferably 70 mol% or less, more preferably 65 mol% or less, further preferably 60 mol% or less, from the viewpoints of prevention of increase in temperature dependence, wet grip performance, elongation at break, and abrasion resistance. Besides, in the present specification, the vinyl bonding amount of the SBR (1,2-bond butadiene unit amount) is measured by infrared absorption spectrometry.

A weight-average molecular weight (Mw) of the SBR is preferably 150,000 or more, more preferably 200,000 or more, further preferably 250,000 or more, from the viewpoint of abrasion resistance. Moreover, the Mw is preferably 2,500,000 or less, more preferably 2,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

An oil-extended SBR or a non-oil extended SBR can be used as a SBR. When the oil-extended SBR is used, an oil-extended amount of the SBR, that is, a content of an oil-extended oil in the SBR is preferably 10 to 50 parts by mass based on 100 parts by mass of a rubber solid content of the SBR.

As SBRs, those manufactured and sold by, for example, Sumitomo Chemical Co., Ltd., JSR Corporation, Ube Industries, Ltd., Asahi Kasei Corporation, Zeon Corporation, ZS Elastomer Co., Ltd., etc. can be used.

A content of the SBR when compounded in the rubber component is preferably 10% by mass or more, more preferably 15% by mass or more, further preferably 20% by mass or more, further preferably 25% by mass or more, further preferably 30% by mass or more, further preferably 35% by mass or more, further preferably 40% by mass or

more, from the viewpoint of securing damping property at the tread part and wet grip performance. Moreover, it is preferably 85% by mass or less, more preferably 80% by mass or less, further preferably 75% by mass or less, particularly preferably 70% by mass or less, from the viewpoint of improvement in durability by suppressing heat generation from the tread part.

(BR)

The BR is not particularly limited, and those common in the tire industry can be used such as, for example, a BR having a cis content (a cis-1,4 bond content) of less than 50% (a low cis BR), a BR having a cis content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). The BRs may be used alone, or two or more thereof may be used in combination.

As rare-earth-based BRs, those commonly used in the tire industry can be used. As rare-earth element-based catalysts used for synthesis (polymerization) of rare-earth-based BRs, well-known ones can be used, examples of which include, for example, lanthanide series rare-earth element compounds, organoalminium compounds, aluminoxanes, halogen-containing compounds, and, as necessary, catalysts including a Lewis base. Among them, a neodymium (Nd)-based catalyst using a Nd-containing compound as a lanthanide series rare-earth element compound is preferable from the viewpoint that a BR having a high cis content and a low vinyl content can be obtained.

Examples of the SPB-containing BR include those in which 1,2-syndiotactic polybutadiene crystal is chemically bonded with BR and dispersed, but not those in which the crystal is simply dispersed in the BR.

Examples of the modified BR include those obtained by adding a tin compound after polymerizing 1,3-butadiene by a lithium initiator, and further those in which the terminal of the modified BR molecules has tin-carbon bond (a tin-modified BR), a butadiene rubber having a condensed alkoxysilane compound at its active terminal (a modified BR for silica), and the like.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity, etc. Besides, the Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

As BRs, those commercially available from Ube Industries, Ltd, Sumitomo Chemical Co., Ltd., JSR Corporation, LANXESS, etc. can be used.

A content of the BR when compounded in the rubber component is preferably 1% by mass or more, more preferably 5% by mass or more, further preferably 10% by mass or more, from the viewpoint of abrasion resistance. Moreover, it is preferably 40% by mass or less, more preferably 35% by mass or less, further preferably 30% by mass or less, further preferably 25% by mass or less, from the viewpoint of wet grip performance.

<Thermoplastic elastomer>

The thermoplastic elastomer exhibits a tan $\delta$ peak value in a range of -20°C to 20°C in a dynamic viscoelasticity test (temperature-dependent measurement at 10Hz) in accordance with JIS K 6394, and the peak value is 1.00 or more. A temperature range in which the tan $\delta$ peak value is present is preferably a range of -15 to 20°C, more preferably a range of -13 to 20°C, further preferably a range of -10 to 20°C, from the viewpoint of effects of the present invention. The peak value is preferably 1.10 or more, more preferably 1.15 or more, further preferably 1.20 or more. From the viewpoint of the present invention, an upper limit of the peak value is not particularly limited to, but usually, 2.00 or less or 1.50 or less.

In the present specification, the "thermoplastic elastomer" is a high-molecular compound having elasticity and means a thermoplastic resin material of a copolymer having a polymer constituting a crystalline hard segment having a high melting point and a polymer constituting a non-crystalline soft segment having a low glass transition temperature. In the thermoplastic elastomer, its crystalline hard segment having a high melting point behaves as a pseudo crosslinking point and exhibits elasticity. Since the pseudo crosslinking point can be reproduced by cooling the thermoplastic elastomer the hard segment of which has been melted by heating, the thermoplastic elastomer is reusable. On the other hand, a rubber has double bonds or the like in a molecular chain, and it generates a three-dimensional network structure by crosslinking (vulcanization) with addition of sulfur or the like and exhibits elasticity. Accordingly, once the rubber is crosslinked (vulcanized), it loses flowability due to this three-dimensional network structure, and therefore it is difficult to be reused even though it is heated. Besides, the thermoplastic elastomer of the present invention shall not include the above-described rubber components.

Examples of the thermoplastic elastomers that can be used in the present invention include, but not particularly limited to, for example, styrene-based thermoplastic elastomers, urethane-based thermoplastic elastomers, olefin-based thermoplastic elastomers, polyester-based thermoplastic elastomers, polyamide-based thermoplastic elastomers, and the like. Among them, styrene-based thermoplastic elastomers or urethane-based thermoplastic elastomers are preferable, and styrene-based thermoplastic elastomers are more preferable. The thermoplastic elastomers can be used alone, or two or more thereof can be used in combination.

(Styrene-based thermoplastic elastomer)

The styrene-based thermoplastic elastomer is a copolymer having at least one styrene block (hard segment) and at least one elastomer block (soft segment). A molecular structure of the styrene-based thermoplastic elastomer is, but not particularly limited to, preferably a molecular structure having a styrene block at one or both ends and an elastomer block in a region other than the one or both ends. When the molecular structure has a styrene block at least at one end, there is a tendency that a better grip performance can be obtained. Also, the styrene-based thermoplastic elastomer has more preferably a structure having no styrene block at a main chain part other than the ends. With such a structure, hardness of the thermoplastic elastomer in a normal temperature range does not become too high, thereby obtaining a better grip performance, and there is a tendency that better fracture characteristics and abrasion resistance can be obtained.

Examples of the elastomer block include, for example, vinyl-polydiene such as styrene-butadiene (SB), polyisoprene (IP), polybutadiene, polyethylene, polychloroprene, poly 2,3-dimethyl butadiene, and the like. Also, an elastomer block obtained by hydrogenating the above-mentioned elastomer block can be used.

Examples of the styrene-based thermoplastic elastomer include, for example, styrene-isobutylene block copolymers (SIB), styrene-butadienestyrene block copolymers (SBS), styrene-isoprene-styrene block copolymers (SIS), styrene-ethylene butylene block copolymers (SEB), styrene-ethylene propylene block copolymers (SEP), styrene-ethylene butylene-styrene block copolymers (SEBS), styrene-ethylene butylene-ethylene block copolymers (SEBC), hydrogenated styrene butadiene copolymers (HSBR), styrene-ethylene propylene-styrene block copolymers (SEPS), styrene-ethylene ethylene propylene-styrene block copolymers (SEEPS), styrene-butadiene butylene-styrene block copolymers (SBBS), and the like.

A styrene-unit content of the styrene-based thermoplastic elastomer (a styrene content) is preferably 5% by mass or more, more preferably 10% by mass or more, from the viewpoint of grip performance. Moreover, it is preferably 30% by mass or less, more preferably 20% by mass or less, from the viewpoint of suppression of heat generation.

(Urethane-based thermoplastic elastomer)

The urethane-based thermoplastic elastomer is not particularly limited, and, for example, those prepared with polyol and diisocyanate can be appropriately used. Examples of polyol include a polyester-based polyol, a polyester ether-based polyol, a polycarbonate-based polyol, a polyether-based polyol, and the like. Examples of diisocyanate include, for example, tolylene diisocyanate (TDI), 4,4'-diphenylmethane diisocyanate (MDI), and the like.

(Olefin-based thermoplastic elastomer)

Examples of the olefin-based thermoplastic elastomer include, for example, ethylene alpha-olefin copolymers such as ethylene-propylene copolymers (EPR), ethylene-butene copolymers (EBR), ethylene-hexene copolymers (EHR), and ethylene-octene copolymers (EOR); ethylene alpha-olefin diene terpolymers such as ethylene-propylene-ethylidene-norbornane copolymers, ethylene-propylene-butadiene copolymers, and ethylene-propylene-isoprene copolymers; and the like.

(Hydrogenation)

Hydrogenation of a thermoplastic elastomer results in high abrasion resistance. Therefore, a hydrogenated thermoplastic elastomer is preferable from the viewpoints of further suppression of deterioration of ride comfort due to abrasion and a long-term maintenance of ride comfort of a lightweight tire. Examples of such a hydrogenated thermoplastic elastomer include, for example, hydrogenated styrene-based thermoplastic elastomers.

The thermoplastic elastomer preferably includes a hydrogenated thermoplastic elastomer or preferably consists of a hydrogenated thermoplastic elastomer.

(Modification)

As thermoplastic elastomers, those modified with a modifying agent and into which a modified group is introduced can also be used, if desired. As such a modified group, any of those commonly used in this field can be used, examples of which include, for example, alkoxysilyl groups (for example, a trimethoxysilyl group, a triethoxysilyl group) and the like. For example, by synthesizing a styrene-based thermoplastic elastomer having a styrene end at least at one end and then treating the synthesized styrene-based thermoplastic elastomer using chlorotriethoxysilane as a modifying agent, it is possible to obtain a modified styrene-based thermoplastic elastomer in which a triethoxysilyl group is introduced into its active end.

As the thermoplastic elastomer, a commercially available thermoplastic elastomer or a thermoplastic elastomer obtained by synthesis may be used. Examples of the commercially available thermoplastic elastomer include, for example, those manufactured and sold by Asahi Kasei Corporation and Kuraray Co., Ltd.

A content of the thermoplastic elastomer based on 100 parts by mass of the rubber component is preferably 1 part by mass or more, more preferably 2 parts by mass or more, further preferably 3 parts by mass or more, further preferably 4 parts by mass or more, further preferably 5 parts by mass or more, from the viewpoint of the effects of the present invention. Moreover, it is preferably 50 parts by mass or less, more preferably 45 parts by mass or less, further preferably 40 parts by mass or less, further preferably 35 parts by mass or less, further preferably 30 parts by mass or less, from the viewpoint of abrasion resistance.

<Reinforcing filler>

The rubber composition according to the present invention preferably comprises, as reinforcing fillers, carbon black and silica. Also, the reinforcing filler may be a reinforcing filler consisting of carbon black and silica.

(Carbon black)

Carbon black is not particularly limited, and those common in the tire industry can be used such as GPF, FEF, HAF, ISAF, and SAF. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. These types of carbon black may be used alone, or two or more thereof may be used in combination.

A nitrogen adsorption specific surface area ($N_2SA$) of carbon black is preferably 50 $m^2/g$ or more, more preferably 80 $m^2/g$ or more, further preferably 100 $m^2/g$ or more, from the viewpoints of weather resistance and reinforcing property. Moreover, it is preferably 250 $m^2/g$ or less, more preferably 220 $m^2/g$ or less, from the viewpoints of dispersibility, fuel efficiency, fracture characteristics, and durability. Besides, the $N_2SA$ of carbon black in the present specification is a value measured according to JIS K 6217-2 "Carbon black for rubber industry-Fundamental characteristics-Part 2: Determination of specific surface area-Nitrogen adsorption methods-Single-point procedures" A Method.

A content of carbon black when compounded based on 100 parts by mass of the rubber component is preferably 1 part by mass or more, more preferably 3 parts by mass or more, further preferably 5 parts by mass or more, from the viewpoints of weather resistance and reinforcing property. Moreover, it is preferably 40 parts by mass or less, more preferably 30 parts by mass or less, further preferably 20 parts by mass or less, from the viewpoint of improvement in durability by suppressing heat generation from the tread part.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. The silica may be used alone, or two or more thereof may be used in combination.

A nitrogen adsorption specific surface area ($N_2SA$) of silica is preferably 140 $m^2/g$ or more, more preferably 150 $m^2/g$ or more, further preferably 160 $m^2/g$ or more, further preferably 170 $m^2/g$ or more, from the viewpoints of reinforcing property and securement of damping property at the tread part. Moreover, it is preferably 350 $m^2/g$ or less, more preferably 300 $m^2/g$ or less, further preferably 250 $m^2/g$ or less, from the viewpoints of heat generation and processability. Besides, a $N_2SA$ of silica in the present specification is a value measured by a BET method according to ASTM D3037-93.

An average primary particle size of silica is, but not particularly limited to, preferably 20 nm or less, more preferably 18 nm or less, and preferably 1 nm or more, more preferably 3 nm or more, further preferably 5 nm or more.

When the average primary particle size of silica is within the above-described ranges, there is a tendency to enable further improvement of reinforcing property, fracture characteristics, and abrasion resistance. Besides, the average primary particle size of silica can be calculated by observing silica with a transmission or scanning electron microscope, measuring 400 or more primary particles of silica observed in the field of view, and averaging them.

A content of silica when compounded based on 100 parts by mass of the rubber component is preferably 20 parts by mass or more, more preferably 25 parts by mass or more, further preferably 30 parts by mass or more, further preferably 35 parts by mass or more, from the viewpoints of securement of damping property at the tread part and wet grip performance. Moreover, it is preferably 100 parts by mass or less, more preferably 80 parts by mass or less, further preferably 75 parts by mass or less, further preferably 70 parts by mass or less, further preferably 65 parts by mass or less, from the viewpoints of achievement of reduction in weight by reducing the specific gravity of the rubber composition, improvement in durability by suppressing of heat generation by the tread part, and securement of ride comfort due to softness of a rubber.

(Other reinforcing fillers)

As reinforcing fillers other than silica and carbon black, those conventionally and commonly used in the tire industry can be compounded, such as aluminum hydroxide, calcium carbonate, alumina, clay, and talc.

A content of silica in 100% by mass of silica and carbon black in total is preferably 50% by mass or more, more preferably 60% by mass or more, further preferably 70% by mass or more, further preferably 80% by mass or more, further preferably 90% by mass or more, or may be 100% by mass.

A total content of the reinforcing filler based on 100 parts by mass of the rubber component is preferably 100 parts by mass or less, more preferably 80 parts by mass or less, further preferably 75 parts by mass or less, further preferably 70 parts by mass or less, further preferably 65 parts by mass or less, from the viewpoint of the effects of the present invention. Moreover, it is preferably 20 parts by mass or more, more preferably 25 parts by mass or more, further preferably 30 parts by mass or more, further preferably 35 parts by mass or more, further preferably 40 parts by mass or more, further preferably 45 parts by mass or more, further preferably 50 parts by mass or more, from the viewpoints of reinforcing property and securement of damping property at the tread part.

Besides, in a case in which the reinforcing filler consists of carbon black and silica, when a total content of the reinforcing filler and a content of one of black carbon and silica are determined in accordance with the above-mentioned descriptions, a content of the other one of black carbon and silica is naturally determined.

(Silane coupling agent)

Silica is preferably used in combination with a silane coupling agent. The silane coupling agent is not particularly limited, and any silane coupling agents conventionally used in combination with silica in the tire industry can be used, such as, for example, a silane coupling agent having a mercapto group described below; a silane coupling agent having a sulfide group such as bis(3-triethoxysilylpropyl)disulfide and bis(3-triethoxysilylpropyl)tetrasulfide; a silane coupling agent having a vinyl group such as vinyltriethoxysilane and vinyltrimethoxysilane; a silane coupling agent having an amino group such as 3-aminopropyltriethoxysilane, 3-aminopropyltrimethoxysilane, and 3-(2-aminoethyl)aminopropyltriethoxysilane; a glycidoxy-based silane coupling agent such as γ-glycidoxypropyltriethoxysilane and γ-glycidoxypropyltrimethoxysilane; a nitro-based silane coupling agent such as 3-nitropropyltrimethoxysilane and 3-nitropropyltriethoxysilane; and a chloro-based silane coupling agent such as 3-chloropropyltrimethoxysilane and 3-chloropropyltriethoxysilane. Among them, the rubber component preferably comprises at least one of a silane coupling agent having a sulfide group and a silane coupling agent having a mercapto group, and preferably comprises a silane coupling agent having a sulfide group. Examples of the silane coupling agents include, for example, those manufactured and sold by Momentive Performance Materials and Evonik Degussa GmbH. These silane coupling agents may be used alone, or two or more thereof may be used in combination.

It is preferable that the silane coupling agent having a mercapto group is at least one of: a compound represented by the following formula (1); and a compound comprising a bond unit A represented by the following formula (2) and a bond unit B represented by the following formula (3).

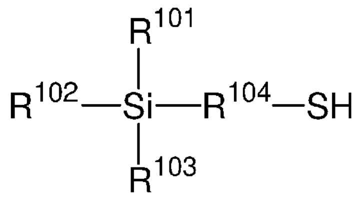

(1)

(wherein, $R^{101}$, $R^{102}$, and $R^{103}$ each independently represents an alkyl having 1 to 12 carbon atoms, an alkoxy having 1 to 12 carbon atoms, or a group represented by $-O-(R^{111}-O)_z-R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms.)

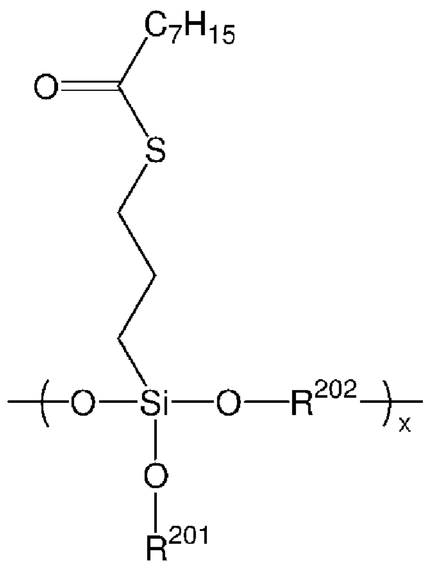

(2)

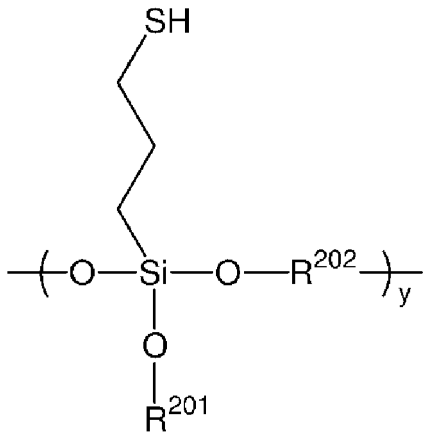

(3)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms optionally substituted with a halogen atom, hydroxyl or carboxyl; and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

Examples of the compound represented by the formula (1) include, for example, 3-mercaptopropyltrimethoxysilane, 3-mercaptopropyltriethoxysilane, 2-mercaptoethyltrimethoxysilane, 2-mercaptoethyltriethoxysilane, a compound represented by the following formula (4), and the like. Examples of these silane coupling agents include, for example, those manufactured by Evonik Degussa GmbH, and the like. These silane coupling agents may be used alone, or two or more thereof may be used in combination.

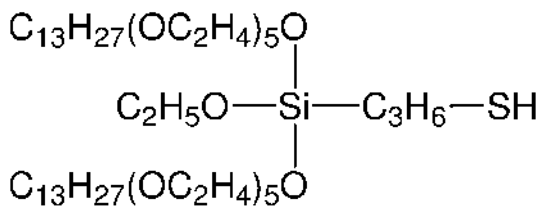

(4)

Examples of the compound comprising the bond unit A represented by the formula (2) and the bond unit B represented by the formula (3) include, for example, those manufactured by Momentive Performance Materials, and the like. These compounds may be used alone, or two or more thereof may be used in combination.

A content of the silane coupling agent when compounded based on 100 parts by mass of silica is preferably 1.0 part by mass or more, more preferably 3.0 parts by mass or more, further preferably 5.0 parts by mass or more, from the viewpoint of improvement in silica dispersibility. Moreover, it is preferably 30 parts by mass or less, more preferably 20 parts by mass or less, further preferably 15 parts by mass or less, from the viewpoint of prevention of deterioration of abrasion resistance.

<Resins>

The rubber composition according to the present invention preferably comprises resin. Examples of resin include, but not particularly limited to, a petroleum resin, a terpene-based resin, a rosin-based resin, a phenol-based resin, and the like, which are commonly used in the tire industry. The resin may be used alone, or two or more thereof may be used in combination.

(Petroleum resin)

Examples of the petroleum resin include, for example, a C5-based petroleum resin, an aromatic petroleum resin, and a C5-C9-based petroleum resin. The petroleum resin can be used alone, or two or more thereof can be used in combination.

«C5-based petroleum resin»

In the present specification, the "C5-based petroleum resin" means a resin obtained by polymerizing C5 fractions. Examples of C5 fractions include, for example, a petroleum fraction having 4 to 5 carbon atoms, such as cyclopentadiene, pentene, a pentadiene, and isoprene. A dicyclopentadiene resin (DCPD resin) is appropriately used as a C5-based petroleum resin. The C5-based petroleum resin can be used alone, or two or more thereof can be used in combination.

<<Aromatic petroleum resin>>

In the present specification, the "aromatic petroleum resin" means resin obtained by polymerizing C9 fractions and may be those undergoing hydrogeneration or modification. Examples of C9 fractions include, for example, a petroleum fraction having 8 to 10 carbon atoms, such as a vinyltoluene, an alkylstyrene, indene, and a methylindene. As specific example of aromatic petroleum resins, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in thermogenic property. As the aromatic vinyl-based resin, for example, commercially available products manufactured by Arizona Chemical Company, and the like are appropriately used. The aromatic petroleum resin can be used alone, or two or more thereof can be used in combination.

«C5-C9-based petroleum resin»

In the present specification, the "C5-C9-based petroleum resin" means resin obtained by polymerizing the C5 fractions and the C9 fractions and may be those undergoing hydrogeneration or modification. Examples of C5 fractions and C9 fractions include the above-described petroleum fractions. As the C5-C9-based petroleum resin, for example, commercially available products manufactured by LUHUA Chemical Co., Ltd., Qilong Chemical Co., Ltd, and Tosoh Corporation, and the like are appropriately used. The C5C9-based petroleum resin can be used alone, or two or more thereof can be used in combination.

(Terpene-based resin)

Examples of the terpene-based resin include a terpene-based resin (a non-hydrogenated terpene-based resin) such as polyterpene resin of at least one selected from terpene compounds such as an α-pinene, a β-pinene, a limonene and a dipentene, an aromatic modified terpene resin made from a terpene compound and an aromatic compound, and a terpene phenol resin made from a terpene compound and a phenol-based compound; and a resin obtained by hydrogenating the terpene-based resin (a hydrogenated terpene-based resin). Here, examples of the aromatic compounds from which the aromatic modified terpene resin is made include, for example, styrene, α-methylstyrene, a vinyltoluene, a divinyltoluene, and the like, and examples of the phenol-based compounds from which the terpene phenol resin is

made include, for example, phenol, bisphenol A, cresol, xylenol, and the like. The terpene-based petroleum resin can be used alone, or two or more thereof can be used in combination.

(Rosin-based resin)

The rosin-based resin is resin comprising, as a main component, a rosin acid obtained by processing a pine rosin. Examples of the rosin-based resin include a natural rosin resin (polymerized rosin) such as a gum rosin, a wood rosin, and a tall oil rosin each comprising, as a main component, a rosin acid such as an abietic acid, a neoabietic acid, a parastrin acid, a levopimaric acid, a pimaric acid, an isopimaric acid, or a dehydroabietic acid; a modified rosin resin such as a hydrogenated rosin resin, an unsaturated carboxylic acid-modified rosin resin, and a rosin-modified phenol resin; a rosin ester such as a rosin glycerol ester and an unsaturated carboxylic acid-modified rosin ester; a disproportionated rosin resin obtained by disproportionating a rosin resin, and the like. The rosin-based petroleum resin can be used alone, or two or more thereof can be used in combination.

(Phenol-based resin)

The phenol-based resin is a resin including a phenol skeleton in its structure, and examples of the phenol-based resin include, for example, a phenol formaldehyde resin, an alkylphenol formaldehyde resin, an alkyl phenol acetylene resin, an oil-modified phenol formaldehyde resin, and the like. The phenol-based resin can be used alone, or two or more thereof can be used in combination.

As resin, an aromatic petroleum resin is preferable, and an aromatic vinyl-based resin is more preferable, from the viewpoint that ride comfort, durability, and wet grip performance can be obtained with good balance.

A content of resin when compounded based on 100 parts by mass of the rubber component is preferably 1 part by mass or more, more preferably 2 parts by mass or more, further preferably 3 parts by mass or more, from the viewpoints of ride comfort and wet grip performance. Moreover, it is preferably 10 parts by mass or less, more preferably 9 parts by mass or less, further preferably 8 parts by mass or less, from the viewpoint of durability.

<Other compounding agents>

The rubber composition for tread according to the present invention can appropriately comprise compounding agents conventionally and commonly used in the tire industry, such as, for example, oil, wax, processing aid, an antioxidant, zinc oxide, stearic acid, a vulcanizing agent such as sulfur, and a vulcanization accelerator, in addition to the above-described components.

(Oil)

Examples of oil include, for example, process oils, vegetable oils and fats, animal oils and fats, and the like. Examples of the process oils include paraffinic process oils, naphthenic process oils, aromatic process oils, and the like. Moreover, examples of process oils include a process oil having a low polycyclic-aromatic-compound (PCA) content for environmental measures. Examples of the process oil having a low PCA content include treated distillate aromatic extracts (TDAE) reextracted from an oil aromatic process oil; aroma alternative oils that are blended oils of asphalt and naphthenic oil; mild extraction solvates (MES); heavy naphthenic oil; and the like.

A content of oil when compounded based on 100 parts by mass of the rubber component is preferably 1 part by mass or more, more preferably 2 parts by mass or more, further preferably 3 parts by mass or more, from the viewpoint of processability. Moreover, it is preferably 40 parts by mass or less, more preferably 30 parts by mass or less, further preferably 20 parts by mass or less, from the viewpoints of fuel efficiency and durability. Besides, in the present specification, the content of oil also includes an amount of oil contained in an oil-extended rubber.

(Wax)

A content of wax when compounded based on 100 parts by mass of the rubber component is preferably 0.5 parts by mass or more, more preferably 1 part by mass or more, from the viewpoint of weather resistance of a rubber. Moreover, it is preferably 10 parts by mass or less, more preferably 5 parts by mass or less, from the viewpoint of prevention of whitening of a tire due to bloom.

(Processing aid)

Examples of processing aid that can be used include a fatty acid metal salt aimed at lowering viscosity and

securing releasability of a rubber in an unvulcanized state, those widely commercially available as compatibilizers from the viewpoint of suppression of microscopic phase separation of the rubber component; and the like.

A content of processing aid when compounded based on 100 parts by mass of the rubber component is preferably 0.5 parts by mass or more, more preferably 1 part by mass or more, from the viewpoint of exhibiting an effect of improving processability. Moreover, it is preferably 10 parts by mass or less, more preferably 5 parts by mass or less, from the viewpoints of abrasion resistance and breaking strength.

(Antioxidant)

Examples of antioxidants include, but not particularly limited to, for example, amine-based, quinoline-based, quinone-based, phenol-based, and imidazole-based compounds, and antioxidants such as a carbamic acid metal salt.

A content of the antioxidant when compounded based on 100 parts by mass of the rubber component is preferably 0.5 parts by mass or more, more preferably 1 part by mass or more, from the viewpoint of ozone crack resistance of a rubber. Moreover, it is preferably 10 parts by mass or less, more preferably 5 parts by mass or less, from the viewpoints of abrasion resistance and wet grip performance.

(Zinc oxide)

A content of zinc oxide when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of abrasion resistance.

(Stearic acid)

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

(Vulcanizing agent)

Sulfur is appropriately used as a vulcanizing agent. As sulfur, powdery sulfur, oil processing sulfur, precipitated sulfur, colloidal sulfur, insoluble sulfur, highly dispersible sulfur, and the like can be used.

A content of sulfur when compounded as a vulcanizing agent based on 100 parts by mass of the rubber component is preferably 0.5 parts by mass or more, more preferably 1.0 part by mass or more, from the viewpoint of securing a sufficient vulcanization reaction. Moreover, it is preferably 7.0 parts by mass or less, more preferably 6.0 parts by mass or less, further preferably 5.0 parts by mass or less, from the viewpoint of prevention of deterioration.

Examples of vulcanizing agents other than sulfur include, for example, an organic cross-kinking agent having sulfur atom such as an alkylphenol-sulfur chloride condensate, 1,6-hexamethylene-sodium dithiosulfate dehydrate, and 1,6-bis(N,N'-dibenzylthiocarbamoyldithio)hexan; an organic peroxide such as dicumyl peroxide; and the like. Examples of these vulcanizing agents other than sulfur include those manufactured by Taoka Chemical Co., Ltd., Flexsys, and LANXESS, and the like.

(Vulcanization accelerator)

Examples of vulcanization accelerator include, but not particularly limited to, for example, sulfenamide-based, thiazole-based, thiuram-based, thiourea-based, guanidine-based, dithiocarbamic acid salt-based, aldehyde-amine-based or aldehyde-ammonia-based, imidazoline-based, and xanthate-based vulcanization accelerators, and among them, sulfenamide-based vulcanization accelerators and guanidine-based vulcanization accelerators are preferable, and it is more preferable to use them in combination, from the viewpoint that desired effects can be obtained more appropriately.

Examples of the sulfenamide-based vulcanization accelerators include N-cyclohexyl-2-benzothiazolyl sulfenamide (CBS), N-t-butyl-2-benzothiazolyl sulfenamide (TBBS), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerators include 2-mercaptobenzothiazole, dibenzothiazolyl disulfide, and the like. Examples of the thiuram-based vulcanization accelerators include tetramethylthiuram monosulfide, tetramethylthiuram disulfide, tetrabenzylthiuram disulfide (TBzTD), and the like. Examples of the guanidine-based vulcanization accelerators include 1,3-diphenylguanidine (DPG), diorthotrilguanidine, orthotrilbiguanidine, and the like. These vulcanization accelerators may be used alone, or two or more thereof may be used in combination. Examples of preferable combination

thereof include a combination of CBS and DPG.

A content of a vulcanization accelerator when compounded based on 100 parts by mass of the rubber component is preferably 1 part by mass or more, more preferably 2 parts by mass or more. Moreover, the content of the vulcanization accelerator based on 100 parts by mass of the rubber component is preferably 8 parts by mass or less, more preferably 7 parts by mass or less, further preferably 6 parts by mass or less. When the content of the vulcanization accelerator is within the above-described ranges, breaking strength and elongation tend to be secured.

<Rubber composition>

The rubber composition can be produced by a known method. For example, it can be produced by kneading the above-described components with a rubber kneading machine such as an open roll or a sealed type kneader (a Banbury mixer, a kneader, and the like).

A kneading step includes, for example, a base kneading step of kneading compounding agents and additives other than vulcanizing agents and vulcanization accelerators; and a final kneading (F-kneading) step of adding the vulcanizing agents and the vulcanization accelerators to the kneaded product obtained in the base kneading step and kneading them. Additionally, the base kneading step can be also divided into multiple steps as necessary. Examples of kneading conditions include, but not particularly limited to, for example, a method of kneading at a discharge temperature of 150°C to 170°C for 1 minute to 10 minutes in the base kneading step and kneading at 70°C to 110°C for 1 minute to 5 minutes in the final kneading step.

<Tire>

In the tire of the present invention, a ratio ($W_T/W_L$) of a tire weight $W_T$ (kg) to a maximum load capacity $W_L$ (kg) of the tire is 0.0176 or less. Here, the $W_T/W_L$ is further preferably 0.0175 or less, further preferably 0.0174 or less. A lower limit of the $W_T/W_L$ is not particularly limited to from the viewpoint of the effects of the present invention, but for example, 0.0165 or more or 0.0167 or more. Besides, the $W_T$ can vary in a usual method, that is, the $W_T$ can be increased by increasing a specific gravity of the tire or a volume of the tire and can be also decreased in the opposite manner.

In the tire of the present invention, a tan $\delta$ (15°C)/$W_T$ is preferably 0.010 or more from the viewpoint of the effects of the present invention. The tan $\delta$ (15°C)/$W_T$ is preferably 0.011 or more, more preferably 0.012 or more. An upper limit of the tan $\delta$ (15°C)/$W_T$ is, but not particularly limited to, usually about 0.016 or less.

The tire of the present invention comprises a tread part formed of the above-described rubber composition and can be used as a tire for a passenger car, a tire for a truck/bus, a run-flat tire, a tire for a two-wheeled vehicle, and the like. Also, it can be used as a summer tire or an all-season tire.

The tire according to the present invention can be produced by a usual method. For example, the tire can be produced by extruding an unvulcanized rubber composition obtained in the above-described manner into a shape of at least one rubber layer of a tread part, attaching it together with other tire members on a tire forming machine and molding them by a usual method to form an unvulcanized tire, followed by heating and pressurizing this unvulcanized tire in a vulcanizing machine. Examples of vulcanization conditions include, but not particularly limited to, for example, a method of vulcanizating at a temperature of 150°C to 200°C for 10 minutes to 30 minutes.

The "tire weight $W_T$", the "tire cross-sectional width W (mm)", the "tire cross-sectional height Ht (mm)", and the "tire outer diameter Dt (mm)" can be measured directly from an actual tire or can be measured from an image captured via computerized tomography (CT) or the like.

The $W_T$ is a weight of a tire alone that does not include a weight of a rim The tire according to the present invention may comprise a sealant for prevention of puncture, an electronic component for monitoring, a noise suppressing body (sponge) for improvement in silence property, and the like. In a case that the tire has these elements, the tire weight Wt shall include weights of these elements.

Each of W, Ht, and Dt is a value measured under a condition that the tire is assembled to a standardized rim, filled with an internal pressure of 250 kPa (for a tire for a passenger car) or 350 kPa (for a tire having a maximum load capacity greater than that of the tire for a passenger car), and unloaded (that is, no load is applied to the tire).

The "standardized rim" is a rim defined for each tire in a standard system including a standard on which the tire is based, and refers to, for example, a "standard rim" of an applicable size described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). Additionally, if the tire is not defined in the above-described standard system, the "standardized rim" refers to a rim having the smallest rim diameter and the narrowest rim width among rims that can be rim-assembled to the tire and that can retain internal pressure, that is, rims that do not cause air leakage between the rim and the tire.

As a method of producing a tire having a "$W_T/W_L$" in accordance with the present invention, various methods

using common general technical knowledge are conceivable. For example, examples of methods mainly contributing to reduction in $W_T$ include reducing a thickness or density of a rubber at a tread part or a side part and reducing a diameter of a cord material used for a tire or reducing an array density. Moreover, examples of methods mainly contributing to increase in $W_L$ include, for example, increasing the tire cross-sectional width W, the tire cross-sectional height Ht, or the tire outer diameter Dt and adjusting rigidity of each element. Appropriate combinations of these methods allow for easy achievement of the tire having the "$W_T/W_L$".

EXAMPLE

Hereinafter, the present invention will be described based on Examples, though the present invention is not limited to these Examples. Note that Examples 1 to 4 and 6 are outside the scope of claim 1.

<Evaluation>

Tables 1 and 2 show results of calculation based on the following evaluation methods assuming a tire (tire having a structure as shown in FIG. 1) having a tread part of a rubber composition to be obtained by changing compounding formulations in accordance with Tables 1 and 2 using various chemicals described below.

(Various chemicals)

NR: TSR20

SBR: Modified solution-polymerized SBR produced in Production example 1 which will be described later (styrene content: 30% by mass, vinyl bond amount: 52 mol%, Mw: 250,000, a non-oil-extended product)

BR: Ubepol BR (Registered Trademark) 150B manufactured by Ube Industries, Ltd. (vinyl bond amount: 1.5 mol%, cis 1,4-content: 97%, Mw: 440,000)

Thermoplastic elastomer 1 (Modified styrene-based thermoplastic elastomer): Thermoplastic elastomer produced in Production example 2 which will be described later (Styrene-(SB)-styrene-type block copolymer having an ethoxysilyl group at one end, tan δ peak value = 1.23, peak temperature = 7°C)

Thermoplastic elastomer 2 (Hydrogenated styrene-based thermoplastic elastomer): S.O.E S1605 manufactured by Asahi Kasei Corporation (Styrene-hydrogenated SB-styrene block copolymer, tan δ peak value = 1.38, peak temperature = 18°C)

Thermoplastic elastomer 3 (Hydrogenated styrene-based thermoplastic elastomer): "HYBRAR 7125" manufactured by Kuraray Co., Ltd. (Styrene-hydrogenated IP-styrene block copolymer, tan δ peak value = 1.84, peak temperature = - 6°C)

Thermoplastic elastomer 4 (Hydrogenated styrene-based thermoplastic elastomer): S.O.E S1611 manufactured by Asahi Kasei Corporation (Styrene-hydrogenated SB-styrene block copolymer, tan δ peak = 0.83, peak temperature = 9°C)

Thermoplastic elastomer 5 (Hydrogenated styrene-based thermoplastic elastomer): Tuftec H1062 manufactured by Asahi Kasei Corporation (Hydrogenated SEBS, tan δ peak value = 0.86, peak temperature = - 47°C)

Resin: Sylvares SA85 manufactured by Arizona Chemical Company (copolymer of α-methylstyrene and styrene, softening point: 85°C)

Carbon black: DIABLACK N220 manufactured by Mitsubishi Chemical Corporation ($N_2SA$: 115 $m^2/g$)

Silica: Ultrasil (Registered Trademark) VN3 manufactured by Evonik Degussa GmbH ($N_2SA$: 175 $m^2/g$, average primary particle size: 17 nm)

Silane coupling agent: Si266 manufactured by Evonik Degussa GmbH (bis(3-triethoxysilylpropyl)disulfide)

Oil: VivaTec 400 manufactured by H&R Group (TDAE oil)

Zinc oxide: Zinc oxide No. 1 manufactured by Mitsui Mining & Smelting Co., Ltd.

Stearic acid: Bead stearic acid "CAMELLIA" manufactured by NOF CORPORATION

Sulfur: HK-200-5 manufactured by Hosoi Chemical Industry Co., Ltd. (5% oil-containing powdered sulfur)

Vulcanization accelerator 1: Nocceler CZ manufactured by Ouchi Shinko Chemical Industry Co., Ltd. (N-cyclohexyl-2-benzothiazolylsulfenamide (CBS))

Vulcanization accelerator 2: Nocceler D manufactured by Ouchi Shinko Chemical Industry Co., Ltd. (1,3-diphenylguanidine (DPG))

(Production example 1)

Synthesis of SBR

An autoclave reactor subjected to nitrogen purge is charged with cyclohexane, tetrahydrofuran, styrene, and 1,3-butadiene. After adjusting temperature of contents in the reactor to 20°C, n-butyllithium is added to initiate polymerization. The polymerization is performed under an adiabatic condition, and the temperature reaches 85°C of the maximum temperature. When a polymerization conversion rate reaches 99%, 1,3-butadiene is added, and after further polymerization for 5 minutes, N,N-bis(trimethylsilyl)-3-aminopropyltrimethoxysilane is added as a modifying agent to perform reaction. After completion of the polymerization reaction, 2,6-di-tert-butyl-p-cresol is added. Next, the mixture is subjected to removal of solvent by a steam stripping and dried by a heat roll whose temperature is adjusted to 110°C to obtain a SBR.

(Production example 2)

Synthesis of thermoplastic elastomer 1

800 g of cyclohexane, 38 g of well-dehydrated styrene, and 7.7 g of cyclohexane solution of sec-butyllithium (10 wt%) are put into a pressure-resistant container equipped with an agitator to perform polymerization reaction at a temperature of 50°C for one hour. Next, 127 g of a mixture of styrene (S) and butadiene (B) (S:B = 3:4 (mol ratio)) is added to perform polymerization reaction for one hour, and then 38 g of styrene is further added to perform polymerization reaction for one hour. Afterward, 2.5 g of chlorotriethoxysilan is added, and finally methanol is added to stop the reaction. A styrene-(SB)-styrene-type block copolymer having an ethoxysilyl group at one end is synthesized. The reaction solution is subjected to vacuum distillation and removed of the solvent, thereby obtaining a thermoplastic elastomer 1. The number average molecular weight obtained by a GPC is 163, 000, and a styrene content is 60%. A tan δ peak value is 1.23 and a peak temperature is 7°C. Besides, using a gel permeation chromatography (GPC) manufactured by Tosoh Corporation as the GPC, and using tetrahydrofuran as the solvent, measurement is performed in terms of a standard polystyrene.

(Examples and Comparative examples)

According to the compounding formulations shown in each of Tables, using a 1.7 L closed Banbury mixer, all chemicals other than sulfur and vulcanization accelerators are kneaded for 1 to 10 minutes until a discharge temperature reaches 150°C to 160°C, to obtain a kneaded product. Next, using a twin-screw open roll, sulfur and vulcanization accelerators are added to the obtained kneaded product, and the mixture is kneaded for 4 minutes until the temperature reaches 105°C, to obtain an unvulcanized rubber composition. The obtained unvulcanized rubber composition is formed into a shape of a tread part 11 and attached together with other tire members (a sidewall part 12, a bead part 13, a bead core 14, a carcass 15, a steel belt 16, and the like) to produce an unvulcanized tire. The unvulcanized tire is press-vulcanized at 170°C for 12 minutes to produce a test tire 1 (195/65 R15 91V) for the compounding formulations of Table 1 and a test tire 2 (195/60 R15 88H) for the compounding formulations of Table 2.

(Measurement of tan δ and complex elastic modulus (E*))

For a vulcanized rubber composition cut out from each of the test tires, a tan δ is measured using a dynamic viscoelasticity measuring apparatus "EPLEXOR 4000N" manufactured by Gabo under a condition of a temperature at 15°C, an initial strain of 5%, a dynamic strain of 1% and a frequency of 10Hz. Moreover, for each test vulcanized rubber composition, a complex elastic modulus (E*) is measured under a condition of a temperature at 30°C, an initial strain of 10%, a dynamic strain of 2% and a frequency of 10Hz.

(Measurement of specific gravity)

For the vulcanized rubber composition cut out from each of the test tires, a specific gravity is calculated according to JIS K 2249-4: 2011 under a condition that: a temperature of the vulcanized rubber composition is 15°C and a temperature of water that is a standard substance used as a criterion is 4°C.

(Ride comfort)

Each of the test tires is filled with air at a pressure of 250kPa and mounted to an automobile. This automobile

is run on a test course with an asphalt road surface and sensory evaluated on ride comfort by ten test drivers (ten-grade evaluation using first grade to tenth grade: a higher grade means better performance). Based on total values of grades given by the ten test drivers, the evaluation results are obtained as indices so that the index of the reference Comparative example (Comparative example 6 or 12) is to be 100 and the indices are proportional to the total values.

(Ride comfort after abrasion)

After the automobile to which each test tire is mounted runs 3000km, its ride comfort is evaluated in the same manner as described above.

(Total performance)

In the present invention, a total performance of ride comfort and ride comfort after abrasion is expressed by a total of indices.

Table 1

| | Example | | | | | | | |
|---|---|---|---|---|---|---|---|---|
| | 1 | 2 | 3 | 4 | 5 | 6 | 7 | 8 |
| Compounding amount (part by mass) | | | | | | | | |
| NR | 30 | 30 | 30 | 30 | 30 | 30 | 30 | 30 |
| SBR | 65 | 60 | 60 | 60 | 60 | 60 | 60 | 60 |
| BR | 5 | 10 | 10 | 10 | 10 | 10 | 10 | 10 |
| Thermoplastic elastomer 1 | 5 | 5 | 5 | 5 | - | - | - | - |
| Thermoplastic elastomer 2 | - | - | - | - | 5 | - | 5 | 20 |
| Thermoplastic elastomer 3 | - | - | - | - | - | 5 | - | - |
| Thermoplastic elastomer 4 | - | - | - | - | - | - | - | - |
| Thermoplastic elastomer 5 | - | - | - | - | - | - | - | - |
| Resin | - | - | - | - | - | - | - | - |
| Carbon black | 5 | 5 | 5 | 5 | 5 | 5 | 5 | 5 |
| Silica | 72 | 75 | 75 | 65 | 65 | 65 | 65 | 65 |
| Silane coupling agent | 5.8 | 6.0 | 6.0 | 5.2 | 5.2 | 5.2 | 5.2 | 5.2 |
| Oil | 12 | 12 | 16 | 8 | 8 | 8 | 8 | 8 |
| Zinc oxide | 3 | 3 | 3 | 3 | 3 | 3 | 3 | 3 |
| Stearic acid | 3 | 3 | 3 | 3 | 3 | 3 | 3 | 3 |
| Sulfur | 2.0 | 1.6 | 1.6 | 1.4 | 1.4 | 1.4 | 1.4 | 1.6 |
| Vulcanization accelerator 1 | 2.3 | 2.2 | 2.2 | 1.8 | 1.8 | 1.8 | 1.8 | 1.8 |
| Vulcanization accelerator 2 | 1.0 | 1.3 | 1.3 | 1.0 | 1.0 | 1.0 | 1.0 | 1.4 |
| E*(30°C) of rubber composition (MPa) | 8.1 | 7.9 | 7.6 | 7.5 | 7.2 | 7.1 | 7.4 | 7.1 |
| tan δ (15°C) of rubber composition | 0.09 | 0.13 | 0.13 | 0.12 | 0.11 | 0.11 | 0.11 | 0.10 |
| Specific gravity of rubber composition | 1.202 | 1.210 | 1.195 | 1.191 | 1.190 | 1.190 | 1.190 | 1.175 |
| Tire weight $W_T$ (kg) | 9.7 | 9.7 | 9.6 | 9.5 | 9.4 | 9.4 | 9.4 | 9.3 |
| Maximum load capacity $W_L$ of tire (kg) | 541 | 542 | 538 | 536 | 536 | 532 | 533 | 531 |
| $W_T/W_L$ | 0.0179 | 0.0179 | 0.0178 | 0.0177 | 0.0175 | 0.0177 | 0.0176 | 0.0175 |
| tan δ (15°C)/$W_T$ | 0.009 | 0.013 | 0.014 | 0.013 | 0.012 | 0.012 | 0.012 | 0.011 |
| Index of ride comfort | 102 | 108 | 110 | 114 | 118 | 114 | 116 | 110 |
| Index of ride comfort after abrasion | 106 | 106 | 110 | 112 | 116 | 116 | 114 | 114 |
| | Comparative example | | | | | | | |
| | 1 | 2 | 3 | 4 | 5 | 6 | | |
| Compounding amount (part by mass) | | | | | | | | |

(continued)

| | Comparative example | | | | | |
|---|---|---|---|---|---|---|
| | 1 | 2 | 3 | 4 | 5 | 6 |
| NR | 30 | 30 | 30 | 30 | 30 | 30 |
| SBR | 65 | 65 | 65 | 65 | 65 | 65 |
| BR | 5 | 5 | 5 | 5 | 5 | 5 |
| Thermoplastic elastomer 1 | - | - | - | - | - | - |
| Thermoplastic elastomer 2 | - | - | - | - | - | - |
| Thermoplastic elastomer 3 | - | - | - | - | - | - |
| Thermoplastic elastomer 4 | - | - | - | - | 5 | - |
| Thermoplastic elastomer 5 | - | - | - | - | - | 5 |
| Resin | 5 | 5 | 5 | 5 | 5 | 5 |
| Carbon black | 5 | 5 | 5 | 5 | 5 | 5 |
| Silica | 72 | 72 | 75 | 68 | 68 | 68 |
| Silane coupling agent | 5.8 | 5.8 | 6.0 | 5.4 | 5.4 | 5.4 |
| Oil | 12 | 6 | 14 | 10 | 10 | 10 |
| Zinc oxide | 3 | 3 | 3 | 3 | 3 | 3 |
| Stearic acid | 3 | 3 | 3 | 3 | 3 | 3 |
| Sulfur | 2.0 | 1.7 | 1.7 | 1.7 | 1.7 | 1.7 |
| Vulcanization accelerator 1 | 2.3 | 2.0 | 2.0 | 2.0 | 2.0 | 2.0 |
| Vulcanization accelerator 2 | 1.0 | 1.0 | 1.0 | 1.0 | 1.0 | 1.0 |
| E*(30°C) of rubber composition (MPa) | 8.1 | 7.5 | 7.2 | 7.2 | 7.1 | 7.1 |
| tan δ (15°C) of rubber composition | 0.09 | 0.11 | 0.12 | 0.13 | 0.12 | 0.12 |
| Specific gravity of rubber composition | 1.202 | 1.206 | 1.197 | 1.193 | 1.191 | 1.191 |
| Tire weight $W_T$ (kg) | 10.1 | 10.2 | 10.0 | 9.9 | 9.7 | 9.7 |
| Maximum load capacity $W_L$ of tire (kg) | 542 | 542 | 541 | 542 | 540 | 541 |
| $W_T/W_L$ | 0.0186 | 0.0188 | 0.0185 | 0.0183 | 0.0180 | 0.0179 |
| tan δ (15°C)/$W_T$ | 0.009 | 0.011 | 0.012 | 0.013 | 0.012 | 0.012 |
| Index of ride comfort | 92 | 94 | 96 | 98 | 98 | 100 |
| Index of ride comfort after abrasion | 90 | 92 | 96 | 98 | 98 | 100 |

Table 2

| | Example | | | | | | | |
|---|---|---|---|---|---|---|---|---|
| | 9 | 10 | 11 | 12 | 13 | 14 | 15 | 16 |
| Compounding amount (part by mass) | | | | | | | | |
| NR | 30 | 30 | 30 | 30 | 30 | 30 | 30 | 30 |
| SBR | 65 | 60 | 60 | 60 | 60 | 60 | 60 | 60 |
| BR | 5 | 10 | 10 | 10 | 10 | 10 | 10 | 10 |
| Thermoplastic elastomer 1 | 5 | 5 | 5 | 5 | - | - | - | - |
| Thermoplastic elastomer 2 | - | - | - | - | 5 | - | 5 | 20 |
| Thermoplastic elastomer 3 | - | - | - | - | - | 5 | - | - |
| Thermoplastic elastomer 4 | - | - | - | - | - | - | - | - |
| Thermoplastic elastomer 5 | - | - | - | - | - | - | - | - |
| Resin | - | - | - | - | - | - | - | - |
| Carbon black | 5 | 5 | 5 | 5 | 5 | 5 | 5 | 5 |
| Silica | 72 | 75 | 75 | 65 | 65 | 65 | 65 | 65 |

(continued)

| | Example | | | | | | | |
|---|---|---|---|---|---|---|---|---|
| | 9 | 10 | 11 | 12 | 13 | 14 | 15 | 16 |
| Silane coupling agent | 5.8 | 6.0 | 6.0 | 5.2 | 5.2 | 5.2 | 5.2 | 5.2 |
| Oil | 12 | 12 | 16 | 8 | 8 | 8 | 8 | 8 |
| Zinc oxide | 3 | 3 | 3 | 3 | 3 | 3 | 3 | 3 |
| Stearic acid | 3 | 3 | 3 | 3 | 3 | 3 | 3 | 3 |
| Sulfur | 2.0 | 1.6 | 1.6 | 1.4 | 1.4 | 1.4 | 1.4 | 1.6 |
| Vulcanization accelerator 1 | 2.3 | 2.2 | 2.2 | 1.8 | 1.8 | 1.8 | 1.8 | 1.8 |
| Vulcanization accelerator 2 | 1.0 | 1.3 | 1.3 | 1.0 | 1.0 | 1.0 | 1.0 | 1.4 |
| E*(30°C) of rubber composition (MPa) | 8.1 | 7.9 | 7.6 | 7.5 | 7.2 | 7.1 | 7.4 | 7.1 |
| tan δ (15°C) of rubber composition | 0.09 | 0.13 | 0.13 | 0.12 | 0.11 | 0.11 | 0.11 | 0.10 |
| Specific gravity of rubber composition | 1.202 | 1.210 | 1.195 | 1.191 | 1.190 | 1.190 | 1.190 | 1.175 |
| Tire weight $W_T$ (kg) | 8.8 | 8.8 | 8.7 | 8.6 | 8.5 | 8.5 | 8.5 | 8.5 |
| Maximum load capacity $W_L$ of tire (kg) | 501 | 500 | 500 | 499 | 490 | 491 | 490 | 489 |
| $W_T/W_L$ | 0.0176 | 0.0176 | 0.0174 | 0.0172 | 0.0173 | 0.0173 | 0.0173 | 0.0174 |
| tan δ (15°C)/$W_T$ | 0.010 | 0.015 | 0.015 | 0.014 | 0.013 | 0.013 | 0.013 | 0.012 |
| Index of ride comfort | 103 | 109 | 111 | 115 | 120 | 115 | 117 | 111 |
| Index of ride comfort after abrasion | 107 | 107 | 111 | 113 | 118 | 118 | 115 | 115 |

| | Comparative example | | | | | |
|---|---|---|---|---|---|---|
| | 7 | 8 | 9 | 10 | 11 | 12 |
| Compounding amount (part by mass) | | | | | | |
| NR | 30 | 30 | 30 | 30 | 30 | 30 |
| SBR | 65 | 65 | 65 | 65 | 65 | 65 |
| BR | 5 | 5 | 5 | 5 | 5 | 5 |
| Thermoplastic elastomer 1 | - | - | - | - | - | - |
| Thermoplastic elastomer 2 | - | - | - | - | - | - |
| Thermoplastic elastomer 3 | - | - | - | - | - | - |
| Thermoplastic elastomer 4 | - | - | - | - | 5 | - |
| Thermoplastic elastomer 5 | - | - | - | - | - | 5 |
| Resin | 5 | 5 | 5 | 5 | 5 | 5 |
| Carbon black | 5 | 5 | 5 | 5 | 5 | 5 |
| Silica | 72 | 72 | 75 | 68 | 68 | 68 |
| Silane coupling agent | 5.8 | 5.8 | 6.0 | 5.4 | 5.4 | 5.4 |
| Oil | 12 | 6 | 14 | 10 | 10 | 10 |
| Zinc oxide | 3 | 3 | 3 | 3 | 3 | 3 |
| Stearic acid | 3 | 3 | 3 | 3 | 3 | 3 |
| Sulfur | 2.0 | 1.7 | 1.7 | 1.7 | 1.7 | 1.7 |
| Vulcanization accelerator 1 | 2.3 | 2.0 | 2.0 | 2.0 | 2.0 | 2.0 |
| Vulcanization accelerator 2 | 1.0 | 1.0 | 1.0 | 1.0 | 1.0 | 1.0 |
| E*(30°C) of rubber composition (MPa) | 8.1 | 7.5 | 7.2 | 7.2 | 7.1 | 7.1 |
| tan δ (15°C) of rubber composition | 0.09 | 0.11 | 0.12 | 0.13 | 0.12 | 0.12 |
| Specific gravity of rubber composition | 1.202 | 1.206 | 1.197 | 1.193 | 1.191 | 1.191 |
| Tire weight $W_T$ (kg) | 9.2 | 9.3 | 9.1 | 9.0 | 8.9 | 8.9 |
| Maximum load capacity $W_L$ of tire (kg) | 500 | 501 | 500 | 498 | 498 | 497 |

(continued)

| | Comparative example | | | | | |
|---|---|---|---|---|---|---|
| | 7 | 8 | 9 | 10 | 11 | 12 |
| $W_T/W_L$ | 0.0184 | 0.0186 | 0.0182 | 0.0181 | 0.0179 | 0.0179 |
| tan δ (15°C)/$W_T$ | 0.010 | 0.012 | 0.013 | 0.014 | 0.013 | 0.013 |
| Index of ride comfort | 91 | 93 | 95 | 98 | 98 | 100 |
| Index of ride comfort after abrasion | 88 | 91 | 95 | 98 | 98 | 100 |

From the above-described results, it can be found that, in the tire of the present invention, ride comfort and ride comfort after abrasion are improved and that deterioration of ride comfort due to abrasion can be suppressed.

REFERENCE SIGNS LIST

10. Tire
11. Tread part
12. Sidewall part
13. Bead part
14. Bead core
15. Carcass
16. Steel belt
18. Longitudinal groove
30. Rim
W. Tire cross-sectional width
Ht. Tire cross-sectional height
Dt. Tire outer diameter

## Claims

**1.** A tire (10) comprising a tread part (11),

the tread part (11) comprising at least one rubber layer of a rubber composition comprising a rubber component and a thermoplastic elastomer, wherein a ratio ($W_T/W_L$) of a tire weight $W_T$ (kg) to a maximum load capacity $W_L$ (kg) of the tire (10) is 0.0176 or less, and
wherein, in a dynamic viscoelasticity test which is a temperature-dependent measurement at 10 Hz in accordance with JIS K 6394, the thermoplastic elastomer exhibits a tan δ peak value in a range of -20°C to 20°C, and the peak value is 1.00 or more,
wherein the maximum load capacity $W_L$ (kg) is a value calculated by the following equations (1) and (2), where W (mm) is a tire cross-sectional width, Ht (mm) is a tire cross-sectional height, and Dt (mm) is a tire outer diameter when the tire is filled with air at a pressure of 250 kPa,

$$V = \{(Dt/2)^2 - (Dt/2 - Ht)^2\} \times \pi \times W \quad \cdots (1)$$

$$W_L = 0.000011 \times V + 100 \quad \cdots (2).$$

**2.** The tire (10) of claim 1,

wherein a tan δ at 15°C of the rubber composition measured under a condition of an initial strain of 5%, a dynamic strain of 1% and a frequency of 10 Hz is 0.10 or more, and
wherein a complex elastic modulus (E*) at 30°C of the rubber composition measured under a condition of an initial strain of 10%, a dynamic strain of 2% and a frequency of 10 Hz is 8.0 MPa or less.

3. The tire (10) of claim 2, wherein the tan δ at 15°C is 0.11 or more.

4. The tire (10) of claim 2 or 3, wherein the complex elastic modulus (E*) at 30°C is 7.9 MPa or less.

5. The tire (10) of any one of claims 1 to 4, wherein a specific gravity of the rubber composition is 1.200 or less, wherein the specific gravity of the rubber composition means a specific gravity of a vulcanized rubber composition and is measured based on JIS K 2249-4:2011.

6. The tire (10) of claim 5, wherein the specific gravity is 1.198 or less.

7. The tire (10) of any one of claims 1 to 6, wherein a ratio of the tan δ at 15°C of the rubber composition measured under a condition of an initial strain of 5%, a dynamic strain of 1% and a frequency of 10 Hz to the tire weight ($W_T$) (kg), tan δ (15°C)/$W_T$, is 0.010 or more.

8. The tire (10) of claim 7, wherein the tan δ (15°C)/$W_T$ is 0.011 or more.

9. The tire (10) of any one of claims 1 to 8, wherein the rubber component comprises at least one selected from a group consisting of an isoprene-based rubber, a styrene-butadiene rubber, and a butadiene rubber.

10. The tire (10) of any one of claims 1 to 9, wherein the rubber composition further comprises a reinforcing filler, and the reinforcing filler comprises 20 to 100 parts by mass of silica based on 100 parts by mass of the rubber component.

11. The tire (10) of claim 10, wherein the reinforcing filler comprises silica and carbon black, and a content of silica in 100% by mass of silica and carbon black in total is 50% by mass or more.

12. The tire (10) of any one of claims 1 to 11, wherein the rubber composition further comprises 1 to 40 parts by mass of oil based on 100 parts by mass of the rubber component.

13. The tire (10) of any one of claims 1 to 12, wherein the rubber composition further comprises a reinforcing filler, and a content of the reinforcing filler based on 100 parts by mass of the rubber component is 75 parts by mass or less.

14. The tire (10) of any one of claims 1 to 13, wherein the thermoplastic elastomer comprises a hydrogenated thermoplastic elastomer.

15. The tire (10) of any one of claims 1 to 14, wherein the tread part (11) comprises at least two layers of: an outer layer forming an outermost surface and an inner layer located inner side with respect to the outer layer, and at least one of these layers is formed of the rubber composition.

**Patentansprüche**

1. Reifen (10), der einen Laufflächenteil (11) umfasst,

   wobei der Laufflächenteil (11) mindestens eine Kautschukschicht aus einer Kautschukzusammensetzung umfasst, die eine Kautschukkomponente und ein thermoplastisches Elastomer umfasst, wobei ein Verhältnis ($W_T$/$W_L$) eines Reifengewichts $W_T$ (kg) zu einer maximalen Tragfähigkeit $W_L$ (kg) des Reifens (10) 0,0176 oder weniger beträgt, und

wobei bei einer dynamischen Viskoelastizitätsprüfung, die eine temperaturabhängige Messung bei 10 Hz gemäß JIS K 6394 ist, das thermoplastische Elastomer einen tan δ-Peakwert in einem Bereich von -20°C bis 20°C aufweist und der Peakwert 1,00 oder mehr beträgt,
wobei die maximale Tragfähigkeit $W_L$ (kg) ein Wert ist, der durch die folgenden Gleichungen (1) und (2) berechnet ist, wobei W (mm) eine Reifenquerschnittsbreite ist, Ht (mm) eine Reifenquerschnittshöhe ist und Dt (mm) ein Reifenaußendurchmesser ist, wenn der Reifen bei einem Druck von 250 kPa mit Luft gefüllt ist,

$$V = \{(Dt/2)^2 - (Dt/2 - Ht)^2\} \times \pi \times W \quad \cdots (1)$$

$$W_L = 0{,}000011 \times V + 100 \quad \cdots (2).$$

**2.** Reifen (10) nach Anspruch 1,

wobei ein tan δ bei 15°C der Kautschukzusammensetzung, gemessen unter einer Bedingung einer anfänglichen Dehnung von 5%, einer dynamischen Dehnung von 1% und einer Frequenz von 10 Hz, 0,10 oder mehr beträgt, und
wobei ein komplexer Elastizitätsmodul (E*) bei 30°C der Kautschukzusammensetzung, gemessen unter den Bedingungen einer anfänglichen Dehnung von 10%, einer dynamischen Dehnung von 2% und einer Frequenz von 10 Hz, 8,0 MPa oder weniger beträgt.

**3.** Reifen (10) nach Anspruch 2,
wobei der tan δ bei 15°C 0,11 oder mehr beträgt.

**4.** Reifen (10) nach Anspruch 2 oder 3,
wobei der komplexe Elastizitätsmodul (E*) bei 30°C 7,9 MPa oder weniger beträgt.

**5.** Reifen (10) nach einem der Ansprüche 1 bis 4,
wobei das spezifische Gewicht der Kautschukzusammensetzung 1,200 oder weniger beträgt, wobei das spezifische Gewicht der Kautschukzusammensetzung ein spezifisches Gewicht einer vulkanisierten Kautschukzusammensetzung bedeutet und auf Grundlage von JIS K 2249-4:2011 gemessen ist.

**6.** Reifen (10) nach Anspruch 5,
wobei das spezifische Gewicht 1,198 oder weniger beträgt.

**7.** Reifen (10) nach einem der Ansprüche 1 bis 6,
wobei das Verhältnis des tan δ bei 15°C der Kautschukzusammensetzung, gemessen unter einer Bedingung einer anfänglichen Dehnung von 5%, einer dynamischen Dehnung von 1% und einer Frequenz von 10 Hz, zu dem Reifengewicht ($W_T$) (kg), tan δ (15°C)/$W_T$, 0,010 oder mehr beträgt.

**8.** Reifen (10) nach Anspruch 7,
wobei tan δ (15°C)/$W_T$ 0,011 oder mehr beträgt.

**9.** Reifen (10) nach einem der Ansprüche 1 bis 8,
wobei die Kautschukkomponente zumindest eine Komponente umfasst, die aus einer Gruppe ausgewählt ist, die aus einem Kautschuk auf Isoprenbasis, einem Styrol-Butadien-Kautschuk und einem Butadien-Kautschuk besteht.

**10.** Reifen (10) nach einem der Ansprüche 1 bis 9,
wobei die Kautschukzusammensetzung ferner einen verstärkenden Füllstoff umfasst und der verstärkende Füllstoff 20 bis 100 Masseteile Siliciumdioxid, bezogen auf 100 Masseteile der Kautschukkomponente, umfasst.

**11.** Reifen (10) nach Anspruch 10,
wobei der verstärkende Füllstoff Kieselsäure und Kohleschwarz (Ruß) umfasst, und der Gehalt an Kieselsäure, bezogen auf eine Gesamtmenge von 100 Masseprozent Kieselsäure und Ruß, 50 Masseprozent oder mehr beträgt.

**12.** Reifen (10) nach einem der Ansprüche 1 bis 11,
wobei die Kautschukzusammensetzung ferner 1 bis 40 Masseteile Öl, bezogen auf 100 Masseteile der Kautschukkomponente, umfasst.

13. Reifen (10) nach einem der Ansprüche 1 bis 12, wobei die Kautschukzusammensetzung ferner einen verstärkenden Füllstoff umfasst und der Gehalt des verstärkenden Füllstoffs bezogen auf 100 Masseteile der Kautschukkomponente 75 Masseteile oder weniger beträgt.

14. Reifen (10) nach einem der Ansprüche 1 bis 13, wobei das thermoplastische Elastomer ein hydriertes thermoplastisches Elastomer umfasst.

15. Reifen (10) nach einem der Ansprüche 1 bis 14, wobei der Laufflächenteil (11) zumindest zwei Schichten umfasst: eine äußere Schicht, die eine äußerste Oberfläche bildet, und eine innere Schicht, die sich in Bezug auf die äußere Schicht auf der Innenseite befindet, und wobei mindestens eine dieser Schichten aus der Kautschukzusammensetzung gebildet ist.

## Revendications

1. Pneu (10) comprenant une partie de la bande de roulement (11),

   la partie de la bande de roulement (11) comprenant au moins une couche de caoutchouc d'une composition de caoutchouc comprenant un composant de caoutchouc et un élastomère thermoplastique, dans lequel un rapport ($W_T/W_L$) d'un poids de pneu $W_T$ (kg) à une capacité de charge maximale $W_L$ (kg) du pneu (10) est de 0,0176 ou moins, et
   dans lequel, lors d'un test de viscoélasticité dynamique qui est une mesure dépendant de la température à 10Hz conformément à la norme JIS K 6394, l'élastomère thermoplastique présente une valeur de crête tan $\delta$ dans une plage de -20°C à 20°C, et la valeur de crête est de 1,00 ou plus,
   dans lequel la capacité de charge maximale $W_L$ (kg) est une valeur calculée par les équations suivantes (1) et (2), où W (mm) est une largeur de section transversale du pneu, Ht (mm) est une hauteur de section transversale du pneu, et Dt (mm) est un diamètre extérieur du pneu lorsque le pneu est rempli d'air à une pression de 250 kPa,

$$V = \{(Dt/2)^2 - (Dt/2 - Ht)^2\} \times \pi \times W \cdots (1)$$

$$W_L = 0{,}000011 \times V + 100 \cdots (2).$$

2. Pneu (10) de la revendication 1,

   dans lequel un tan $\delta$ à 15°C de la composition de caoutchouc mesuré dans une condition d'une déformation initiale de 5 %, d'une déformation dynamique de 1 % et d'une fréquence de 10 Hz est de 0,10 ou plus, et
   dans lequel un module élastique complexe (E*) à 30°C de la composition de caoutchouc mesuré dans une condition de déformation initiale de 10 %, une déformation dynamique de 2 % et une fréquence de 10 Hz est de 8,0 MPa ou moins.

3. Pneu (10) de la revendication 2, dans lequel le tan $\delta$ à 15°C est égal ou supérieur à 0,11.

4. Pneu (10) de la revendication 2 ou 3, dans lequel le module d'élasticité complexe (E*) à 30°C est inférieur ou égal à 7,9 MPa.

5. Pneu (10) de l'une quelconque des revendications 1 à 4, dans lequel une gravité spécifique de la composition de caoutchouc est de 1,200 ou moins, la gravité spécifique de la composition de caoutchouc signifiant une gravité spécifique d'une composition de caoutchouc vulcanisée et étant mesurée sur la base de la norme JIS K 2249-4:2011.

6. Pneu (10) de la revendication 5, dans lequel la gravité spécifique est de 1,198 ou moins.

7. Pneu (10) de l'une quelconque des revendications 1 à 6, dans lequel un rapport du tan δ à 15°C de la composition de caoutchouc mesuré dans une condition de déformation initiale de 5%, une déformation dynamique de 1 % et une fréquence de 10 Hz au poids du pneu ($W_T$) (kg), tan δ (15°C)/$W_T$, est de 0,010 ou plus.

8. Pneu (10) de la revendication 7, dans lequel le tan δ (15°C)/$W_T$ est égal ou supérieur à 0,011.

9. Pneu (10) de l'une quelconque des revendications 1 à 8, dans lequel le composant en caoutchouc comprend au moins un élément choisi dans un groupe constitué d'un caoutchouc à base d'isoprène, d'un caoutchouc styrène-butadiène et d'un caoutchouc butadiène.

10. Pneu (10) de l'une quelconque des revendications 1 à 9, dans lequel la composition de caoutchouc comprend en outre une charge renforçante, et la charge renforçante comprend de 20 à 100 parties en masse de silice sur la base de 100 parties en masse du composant de caoutchouc.

11. Pneu (10) de la revendication 10, dans lequel la charge renforçante comprend de la silice et du noir de carbone, et une teneur en silice dans 100 % en masse de silice et de noir de carbone au total est de 50 % en masse ou plus.

12. Pneu (10) de l'une quelconque des revendications 1 à 11, dans lequel la composition de caoutchouc comprend en outre de 1 à 40 parties en masse d'huile sur la base de 100 parties en masse du composant de caoutchouc.

13. Pneu (10) de l'une quelconque des revendications 1 à 12, dans lequel la composition de caoutchouc comprend en outre une charge renforçante, et une teneur de la charge renforçante basée sur 100 parties en masse du composant en caoutchouc est de 75 parties en masse ou moins.

14. Pneu (10) de l'une quelconque des revendications 1 à 13, dans lequel l'élastomère thermoplastique comprend un élastomère thermoplastique hydrogéné.

15. Pneu (10) de l'une quelconque des revendications 1 à 14, dans lequel la partie de la bande de roulement (11) comprend au moins deux couches : une couche externe formant une surface extérieure et une couche interne située côté intérieur par rapport à la couche externe, et au moins une de ces couches est formée de la composition de caoutchouc.

FIG. 1

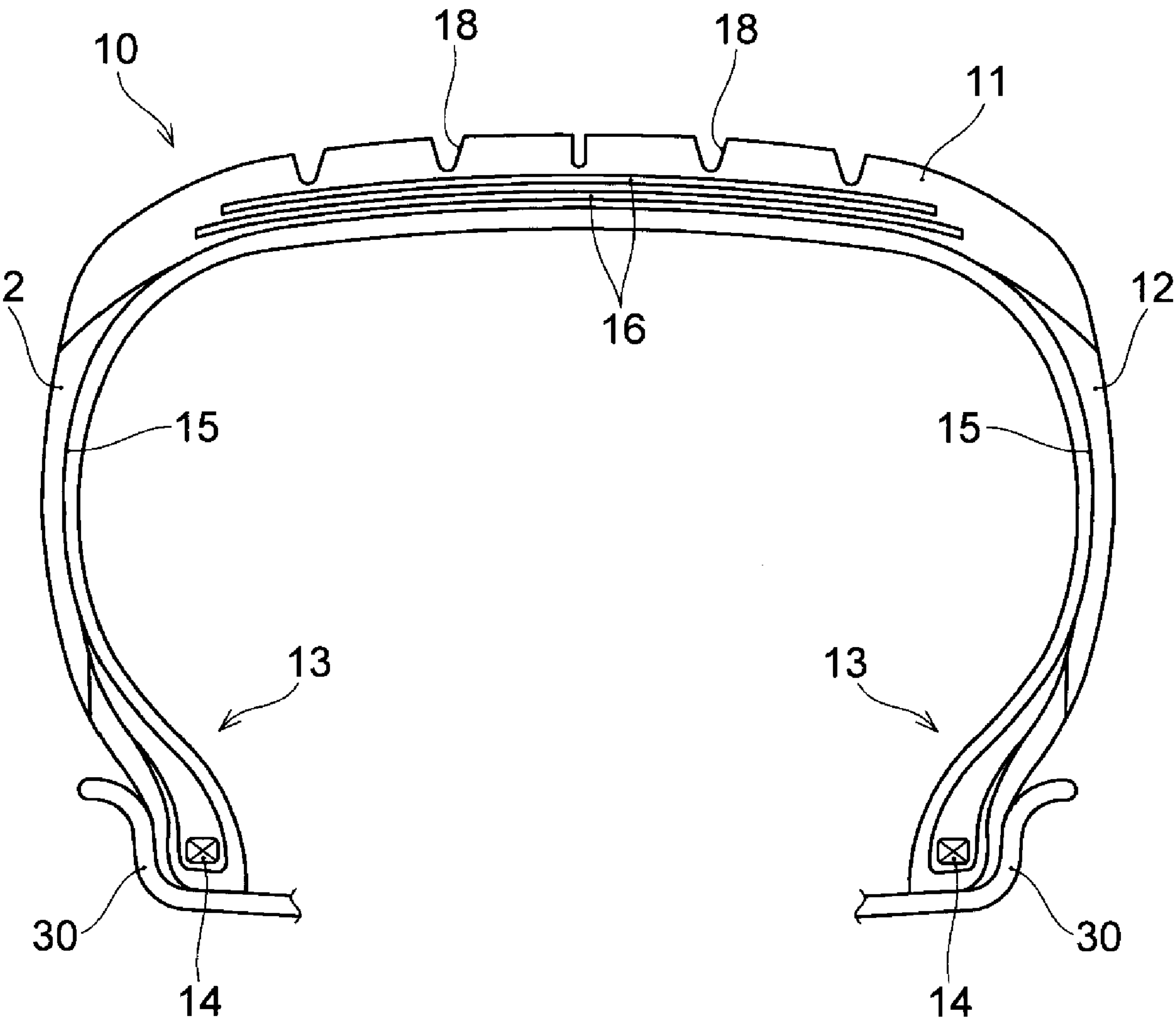

FIG. 2

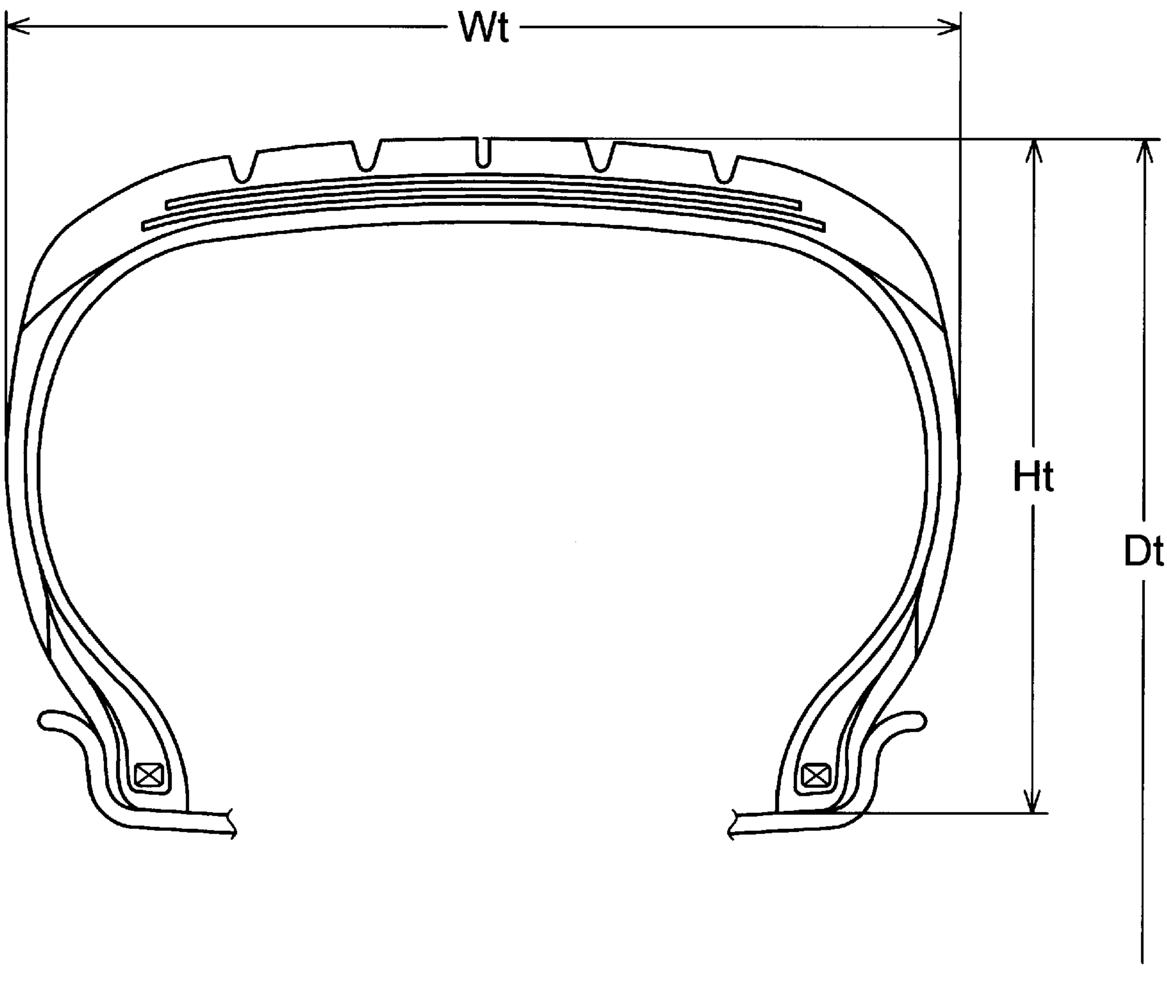

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017043281 A
- US 2018171118 A1
- US 2018171120 A1
- JP 2007119582 A